# EUROPEAN PATENT APPLICATION

(11) **EP 3 346 170 A1**
(43) Date of publication of application: **11.07.2018**
(21) Application number: 16842079.2
(22) Date of filing: 12.05.2016
(51) Int. Cl.: F16K 27/02, F15D 1/02, F16K 7/12, F16K 51/00

(54) **VALVE CAPABLE OF PREVENTING VORTEX AND CORE USED THEREFOR**

(30) Priority: 03.09.2015 KR 20150124997; 23.09.2015 KR 20150134646; 23.09.2015 KR 20150134651
(71) Applicant: Fluonics Corp., Wonju-si, Gangwon-do 26302 (KR)
(72) Inventor: LEE, Sang Seon, Wonju-si Gangwon-do 26386 (KR)
(74) Representative: Zardi, Marco
(86) International application number: PCT/KR2016/004982
(87) International publication number: WO 2017/039113

(57) **Abstract**

Disclosed are a valve capable of preventing a vortex and a core used therefor. The plastic valve comprises: a body made of plastic; a core formed inside the body; and an opening/closing portion. A fluid transfer hole is formed in the inner space of the core such that a fluid moves therethrough. The opening/closing portion contacts one end of the core through a hole of the body, when the valve is closed, thereby blocking the movement of the fluid. At least a part of the portion of the inner surface of the core, which corresponds to the fluid transfer hole, adjacent to the hole of the body, or at least a part of the portion of the core, which contacts the opening/closing portion, has a curved shape.

## Description

### TECHNICAL FIELD

The present invention relates to a valve capable of preventing vortexes and a core used therefor.

### BACKGROUND ART

A valve is a means for opening and closing the flow of a fluid and may control the flow of a fluid by using a diaphragm or a ball.

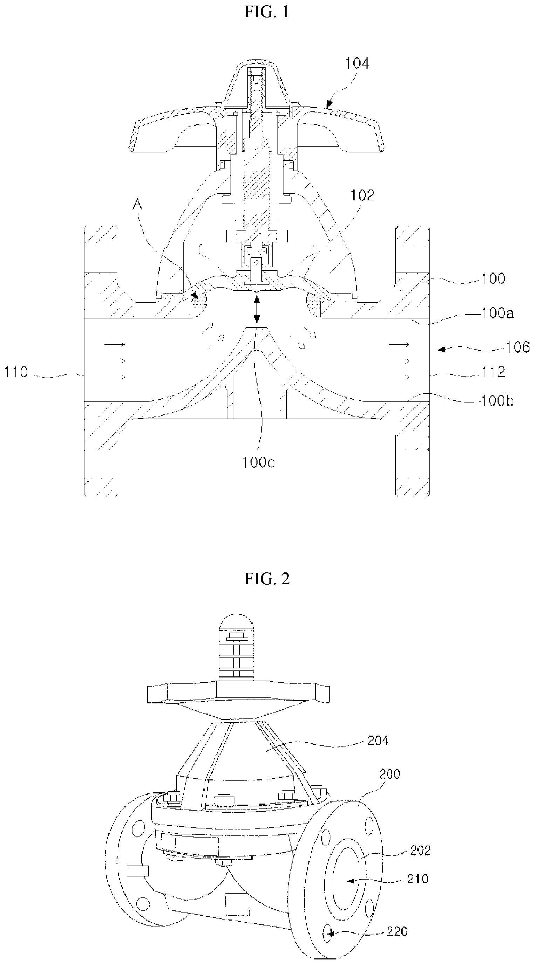

FIG. 1 is a diagram illustrating the structure of a general valve.

Referring to FIG. 1, a valve may include a main body 100, a diaphragm 102, and a manipulation part 104 for controlling the diaphragm 102.

The main body 100 may have a fluid transport channel 106 formed therein, and a fluid that enters through the inlet 110 of the fluid transport channel 106 may exit through the outlet 112.

Looking at the fluid transport channel 106, the parts of the upper-side inner surface 100a of the main body that are adjacent to the diaphragm 102 may have rectangular cross sections, and the part 100c of the lower-side inner surface 100b that contacts the diaphragm 102 may have an angular form.

Due to the parts of the main body having rectangular cross sections and the part 100c of the main body having an angular form, vortexes can be created at portions A in the fluid transport channel 106. As such, the parts of the main body having rectangular cross sections and the part 100c of the main body having an angular form hinder the flow of the fluid, causing changes in fluid energy or fluid speed in terms of fluid dynamics, and this in turn become causes of vortexes.

Such vortexes can damage the main body 100 and the diaphragm 102, consequently reducing the lifespan of the valve.

### DISCLOSURE

### TECHNICAL PROBLEM

An objective of the present invention is to provide a valve and a core used therein with which the occurrence of vortexes can be prevented.

One aspect of the present invention provides a valve capable of preventing vortexes and a core used therein.

### TECHNICAL SOLUTION

An embodiment of the invention can provide a plastic valve that includes: a main body made from plastic;
a core formed inside the main body; and a closure part, where a fluid transport channel configured to accommodate a fluid moving therethrough is formed in an inner space of the core, the closure part contacts one end of the core through a hole of the main body to block a movement of the fluid when the valve is closed, and at least a portion of a core part contacting the closure part or a part adjacent to the hole of the main body at an inner surface of the core corresponding to the fluid transport channel has a curved shape.

Another embodiment of the present invention can provide a plastic valve that includes: a main body made from plastic;
a core formed inside the main body; and a closure part, where a fluid transport channel configured to accommodate a fluid moving therethrough is formed in an inner space of the core, the closure part contacts one end of the core through a hole of the main body to block a movement of the fluid when the valve is closed, and a shape of the fluid transport channel is determined such that, from among a fluid energy at an inlet of the fluid transport channel, a fluid energy at a part of the fluid transport channel corresponding with the closure part, and a fluid energy at an outlet of the fluid transport channel, at least two values of fluid energy are equal.

Still another embodiment of the present invention can provide a plastic valve that includes: a main body made from plastic;
a core formed inside the main body; and a closure part, where a fluid transport channel configured to accommodate a fluid moving therethrough is formed in an inner space of the core, the closure part contacts one end of the core through a hole of the main body to block a movement of the fluid when the valve is closed, and the semi-major axis of a virtual circle formed by a curve of the core part contacting the closure part having the curved shape has a length shorter than twice the length of the semi-minor axis of the circle.

Still another embodiment of the present invention can provide a plastic valve that includes: a main body made from plastic;
a core formed inside the main body; and a closure part, where a fluid transport channel configured to accommodate a fluid moving therethrough is formed at an inside of the core, the closure part contacts one end of the core through a hole of the main body to block a movement of the fluid when the valve is closed, a fluid entering through an inlet of the fluid transport channel exits through an outlet of the fluid transport channel, and fluids flowing at an upper part and a lower part across a particular cross section of the fluid transport channel have the same speed so that a vortex is not created within the fluid transport channel until the exit of the entered fluid.

Still another embodiment of the present invention can provide a valve that includes: a main body made from plastic; a core formed at an inside of the main body; and a closure part positioned above the main body, where a fluid transport channel configured to accommodate a fluid moving therethrough is formed in an inner space of the core, the closure part contacts one end of the core through a hole of the main body to block a movement of the fluid when the valve is closed, and a distal end of the core corresponding to an inlet or outlet of the fluid transport channel has a protruding part formed thereon, with the protruding part having a structure configured to be received in a holding part formed in a pipe.

Still another embodiment of the present invention can provide a valve that includes: a main body made from plastic; a core formed at an inside of the main body; and a closure part positioned above the main body, wherein a fluid transport channel configured to accommodate a fluid moving therethrough is formed at an inside of the core, the closure part contacts one end of the core through a hole of the main body to block a movement of the fluid when the valve is closed, and a distal end of the core corresponding to an inlet or outlet of the fluid transport channel has a holding part formed therein, with the holding part having a structure configured to receive a protruding part of a pipe.

Still another embodiment of the present invention can provide a core that is positioned at an inside of a main body in a valve, where a fluid transport channel configured to accommodate a fluid moving therethrough is formed at an inner surface of the core, the inner surface of the core includes an upper-side inner surface and a lower-side inner surface, and at least a portion of a part contacting a closure part of the main body or a part adjacent to a hole of the main body at the inner surface of the core corresponding to the fluid transport channel has a curved shape.

Still another embodiment of the present invention can provide a core that is positioned at an inside of a main body in a valve, where a fluid transport channel is formed at an inner surface of the core, the inner surface of the core includes an upper-side inner surface and a lower-side inner surface, and shapes of the inner surfaces of the fluid transport channel are determined such that, from among a fluid energy at an inlet of the fluid transport channel, a fluid energy at a part of the fluid transport channel corresponding with a closure part of the valve, and a fluid energy at an outlet of the fluid transport channel, at least two values of fluid energy are equal, so that a vortex is not created at a vicinity of the hole.

Still another embodiment of the present invention can provide a core that is positioned at an inside of a main body in a valve, where a fluid transport channel is formed at an inner surface of the core, the inner surface of the core includes an upper-side inner surface and a lower-side inner surface, and shapes of the inner surfaces of the fluid transport channel are determined such that a fluid energy at an inlet of the fluid transport channel and a fluid energy at an outlet of the fluid transport channel are equal, so that a vortex is not created at a vicinity of the hole.

Still another embodiment of the present invention can provide a core that is positioned at an inside of a main body in a valve, where a fluid transport channel is formed at an inner surface of the core, a closure part of the valve contacts a part of the core through a hole of the main body to block a movement of a fluid in the fluid transport channel when the valve is closed, a core part contacting the closure part corresponds to a portion of a virtual circle, and the semi-major axis of the circle has a length shorter than twice the length of the semi-minor axis of the circle.

Still another embodiment of the present invention can provide a core that is positioned at an inside of a main body in a valve, where a fluid transport channel is formed at an inner surface of the core, a closure part of the valve contacts a part of the core through a hole of the main body to block a movement of a fluid in the fluid transport channel when the valve is closed, and a speed of the fluid is constant over the entire part in the fluid transport channel corresponding with the closure part so that a vortex is not created.

Still another embodiment of the present invention can provide a core that is positioned at an inside of a main body in a valve, where a fluid transport channel is formed at an inner surface of the core, a closure part of the valve contacts a part of the core through a hole of the main body to block a movement of a fluid in the fluid transport channel when the valve is closed, a fluid entering through an inlet of the fluid transport channel exits through an outlet of the fluid transport channel, and fluids flowing along at an upper part and a lower part across a particular cross section of the fluid transport channel have the same speed so that a vortex is not created within the fluid transport channel until an exit of an entered fluid.

### ADVANTAGEOUS EFFECTS

With a valve capable of preventing vortexes according to an embodiment of the present invention, there are no obstacles that hinder the flow of the fluid within the fluid transport channel, so that there are no occurrences of vortexes in the fluid transport channel.

In particular, as the fluid energy is the same overall within the fluid transport channel, the occurrence of vortexes can be further suppressed.

By thus suppressing the occurrence of vortexes within the fluid transport channel, the present invention can extend the lifespan of the main body and core.

### DESCRIPTION OF DRAWINGS

FIG. 1 is a diagram illustrating the structure of a general valve.
FIG. 2 is a perspective view of a plastic valve according to an embodiment of the present invention.
FIG. 3 is a cross-sectional view conceptually illustrating a plastic valve according to an embodiment of the present invention.
FIG. 4 is a cross-sectional view of a valve according to another embodiment of the present invention.
FIG. 5 and FIG. 6 are diagrams conceptually illustrating a valve according to still another embodiment of the present invention.
FIG. 7 is a diagram conceptually illustrating a plastic valve according to still another embodiment of the present invention.
FIG. 8 is a perspective view conceptually illustrating the structure of a core and main body according to an embodiment of the present invention.
FIG. 9 and FIG. 10 are diagrams conceptually illustrating a plastic valve according to still another embodiment of the present invention.
FIG. 11 is a diagram conceptually illustrating a plastic valve according to still another embodiment of the present invention.
FIG. 12 is a cross-sectional view across line A-A of FIG. 2, showing the internal flow path in an open state.
FIG. 13 and FIG. 14 are diagrams illustrating the shape of the core 202.
FIG. 15 and FIG. 16 are diagrams illustrating the part of the lower-side inner surface that contacts the closure part.
FIG. 17 through FIG. 19 are diagrams illustrating a closure part with diaphragms of various structures applied.

### MODE FOR INVENTION

As the invention allows for various changes and numerous embodiments, particular embodiments will be illustrated in the drawings and described in detail in the written description. However, this is not intended to limit the present invention to particular modes of practice, and it is to be appreciated that all changes, equivalents, and substitutes that do not depart from the spirit and technical scope of the present invention are encompassed in the present invention. In the description of the present invention, certain detailed explanations of related art are omitted if it is deemed that they may unnecessarily obscure the essence of the invention.

While such terms as "first" and "second," etc., may be used to describe various components, such components must not be limited to the above terms. The above terms are used only to distinguish one component from another.

The terms used in the present specification are merely used to describe particular embodiments, and are not intended to limit the present invention. An expression used in the singular encompasses the expression of the plural, unless it has a clearly different meaning in the context. In the present specification, it is to be understood that the terms such as "including" or "having," etc., are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

The present invention relates to a valve capable of preventing vortexes and proposes a valve that is structured such that vortexes (turbulences) are not created in the fluid transport channel. Here, the valve refers to a valve of which the main body is made of plastic.

When a fluid moves in a fluid transport channel, factors such as energy transfer, speed, etc., can cause vortexes. In particular, if there are obstacles that hinder the flow of the fluid within the fluid transport channel, these may create differences in speed in different portions of the fluid, causing vortexes.

Such vortexes impact the main body and core and can reduce the lifespan of the main body and core. Thus, the present invention proposes a valve having a structure in which such obstacles are eliminated, to allow a smooth flow of the fluid and prevent the occurrence of vortexes beforehand.

According to one embodiment, a valve based on the present invention can be formed without edged portions in the inner surface of the core corresponding with the fluid transport channel, and in particular, a portion of the inner surface can be made to have a curved (streamlined) shape to allow a smooth flow of fluid.

According to another embodiment, the valve can have the shape of the inner surface of the core or the fluid transport channel determined such that substantially the same fluid energy is transferred from the inlet to the outlet within the fluid transport channel.

According to still another embodiment, the speeds of fluids (flow speeds) can be such that the fluids flowing at an upper part and a lower part across the same cross section can move at different speeds due to the friction of the core's inner surface and obstacles (bent portions, etc.) of the core's inner surface. In particular, the speed of a fluid flowing at the upper side or lower side can be different from the speed of the fluid flowing at the center, and such differences in flow speed can cause vortexes. Thus, the shape of the inner surface of the core or the fluid transport channel can be determined such that the flow speeds are substantially the same both at the inner surface of the core within the fluid transport channel and at the center of the fluid transport channel at the corresponding part.

If there is high friction on the inner surface of the core, there is a possibility of vortexes being created by friction, but in a core with the friction minimized at the inner surface, changes in flow speed would likely be caused by obstacles that hinder the flow of the fluid. Therefore, the shape of the inner surface of the core can be determined such that no obstacles are formed within the fluid transport channel.

A detailed description is provided below, with reference to the accompanying drawings, on the various structures and operations of a valve capable of preventing vortexes according to an embodiment of the present invention. The valve capable of preventing vortexes can use a diaphragm or a ball as the closure part, but in the descriptions below, a diaphragm will be used as a closure part for the sake of convenient explanation. However, the structure of the inner surface of the core or the fluid transport channel can be applied to all valves regardless of the structure of the closure part.

Certain embodiments of the present invention are described below in more detail with reference to the accompanying drawings.

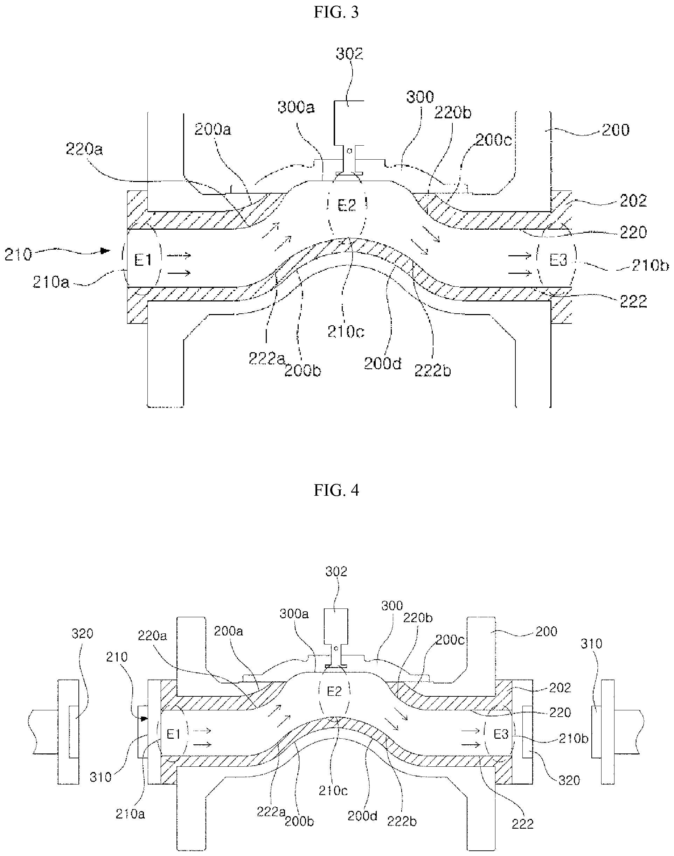

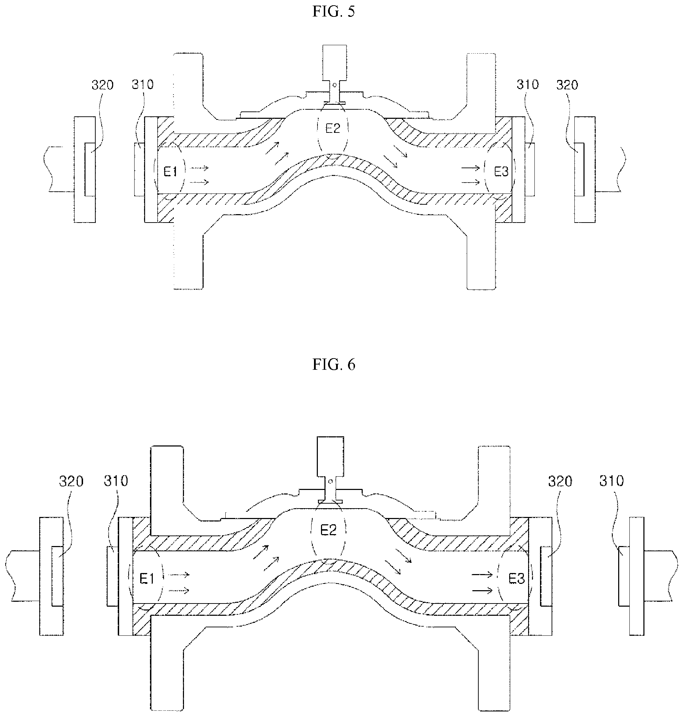

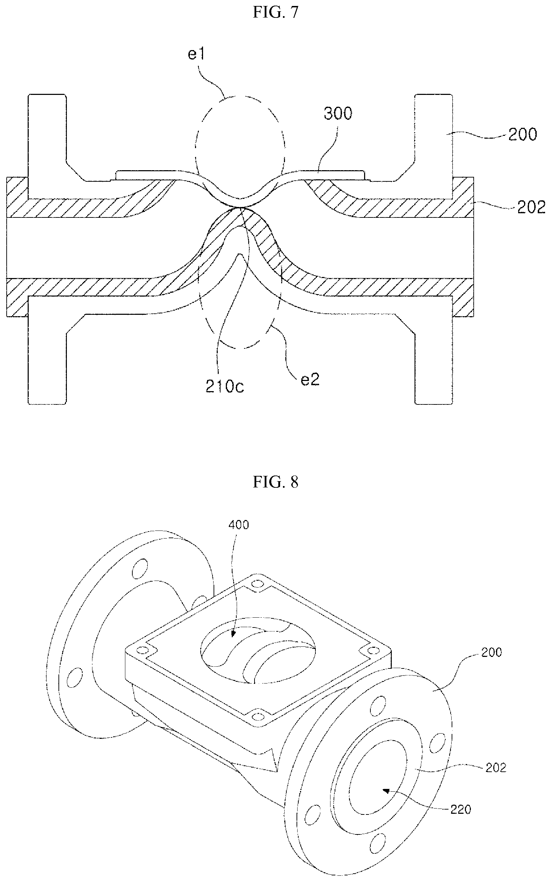

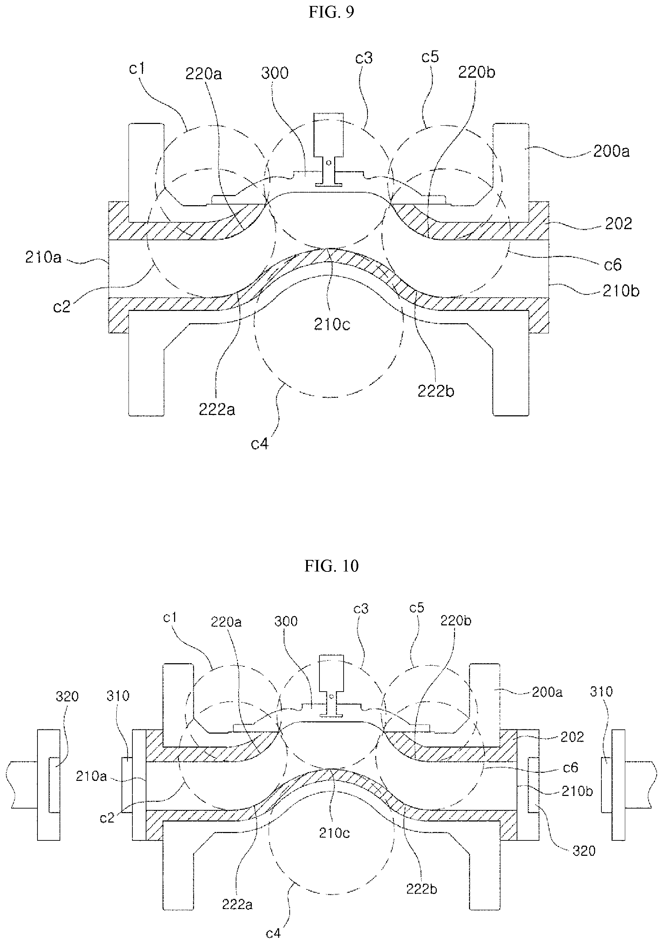

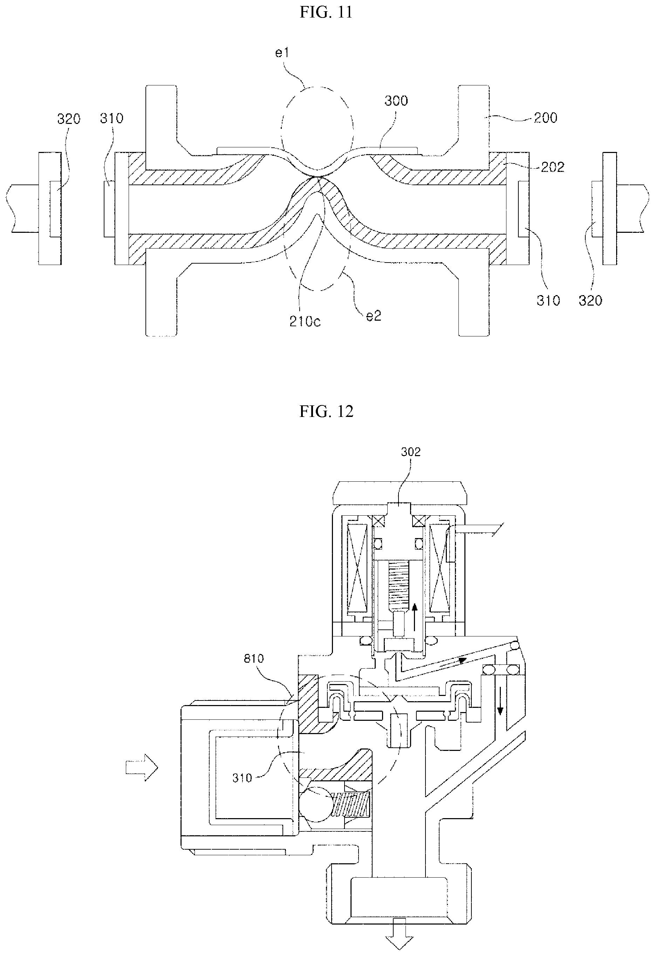

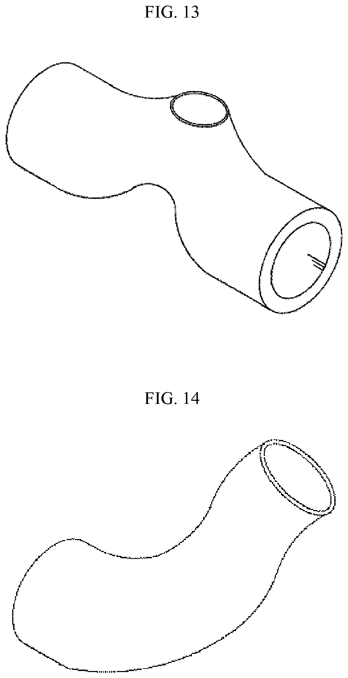

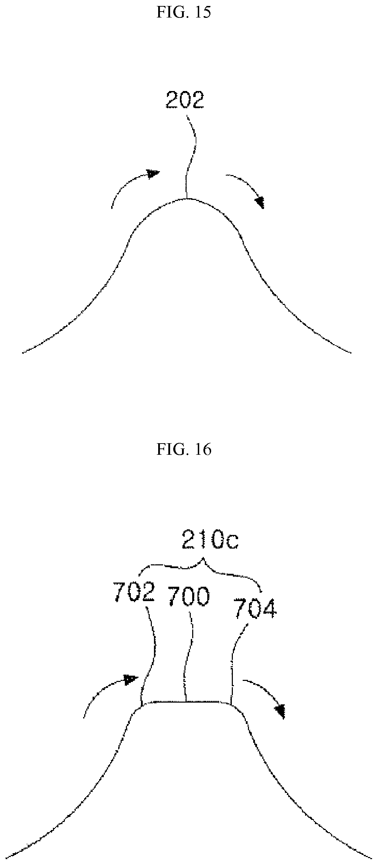

FIG. 2 is a perspective view of a plastic valve according to an embodiment of the present invention, FIG. 3 is a cross-sectional view conceptually illustrating a plastic valve according to an embodiment of the present invention, FIG. 4 is a cross-sectional view of a valve according to another embodiment of the present invention, FIG. 5 and FIG. 6 are diagrams conceptually illustrating a valve according to still another embodiment of the present invention, FIG. 7 is a diagram conceptually illustrating a plastic valve according to still another embodiment of the present invention, FIG. 8 is a perspective view conceptually illustrating the structure of a core and main body according to an embodiment of the present invention, FIG. 9 and FIG. 10 are diagrams conceptually illustrating a plastic valve according to still another embodiment of the present invention, FIG. 11 is a diagram conceptually illustrating a plastic valve according to still another embodiment of the present invention, FIG. 12 is a cross-sectional view across line A-A of FIG. 2 showing the internal flow path in an open state, FIG. 13 and FIG. 14 are diagrams illustrating the shape of the core 202, and FIG. 15 and FIG. 16 are diagrams illustrating the part of the lower-side inner surface that contacts the closure part.

Referring to FIG. 2 and FIG. 3, a valve according to a first disclosed embodiment may include a main body 200, a core 202, a manipulation part 204, and a closure part 300.

According to the first disclosed embodiment, the valve can be a valve of which the main body is made of plastic or a material other than plastic such as steel.

The main body 200 can be made of plastic, such as engineering plastic for example.

The main body of a conventional plastic valve was made of a vinyl chloride resin (PVC), etc., but since the heat deflection temperature of such PVC is about 70 degrees, the plastic valve could not be used at temperatures of 60 degrees or higher. However, by forming the main body 200 from engineering plastic, the plastic valve can be used at high temperatures of 60 degrees or higher, even around 100 degrees.

According to one embodiment, the main body 200 can be made from a polyphenylene ether group resin compound containing a polyphenylene ether group resin and a polystyrene group resin as the engineering plastic. Of course, the main body 200 can also be made from polyimide, polysulfone, polyphenylene sulfide, polyamide imide, polyacrylate, polyether sulfone, polyether ether ketone, polyether imide, liquid crystal polyester, polyether ketone, etc., and a combination thereof as the engineering plastic.

Holes 220 can be formed in the distal ends at the sides of the main body 200, and while it is not illustrated in the drawings, fastening means can be applied through the holes 220 to connect the valve with pipes.

The core 202 may be formed on the inside of the main body 200, and a hole for fluid movement (a fluid transport channel 210) may be formed at the inner surface of the core 202.

According to one embodiment, the core 202 can be made from a fluorine resin. A fluorine resin is a collective term for resins that contain fluorine in the molecules such as polytetrafluoroethylene (PTFE), polychlorotrifluoroethylene (PCTFE), etc., and examples can include tetra fluoro ethylene perfluoro alkylvinyl ether copolymer (PFA). Such types of fluorine resin have superb thermal resistance, chemical resistance, and electrical insulation properties, a low coefficient of friction, and no adhesion or stickiness. That is, if the core 202 is made with a fluorine resin, changes in flow speed in laminar flow within the fluid transport channel 210 can be minimized due to the low coefficient of friction of the core 202. In other words, the difference in flow speeds can be minimized between an upper part or a lower part and the center part of the fluid transport channel at a particular reference point.

FIG. 4 shows a cross-sectional view of a valve according to another embodiment of the present invention. Referring to FIG. 4, a protruding part 310 can be formed at a distal end of the core 202 corresponding to one of the inlet and outlet of the fluid transport channel 210. Also, at the distal end of the core 202 corresponding to the other of the inlet and outlet of the fluid transport channel 210, a holding part 320 can be formed.

Accordingly, the protruding part 310 can be received in a holding part 320 formed in a pipe.

With a protruding part 310 formed on the fluid transport channel 210 and a holding part 320 forming in the pipe in this manner, the valve and the pipe can be connected without a separate fastening means.

In another example, referring to FIG. 5, protruding parts 310 can be formed respectively on both distal ends of the core 202 corresponding to the inlet and the outlet of the fluid transport channel. These protruding parts 310 can be received in holding parts 320 formed in the pipes.

In yet another example, referring to FIG. 6, holding parts 320 can be formed respectively in both distal ends of the core 202 corresponding to the inlet and the outlet of the fluid transport channel 210. These holding parts 320 can receive the protruding parts 310 formed on the pipes.

The closure part 300 may be a means for permitting or closing the movement of the fluid within the fluid transport channel 210 and can be positioned above the main body 200 or the core 202. When allowing the fluid to flow through the fluid transport channel 210, the closure part 300 may have the structure of FIG. 3, whereas when closing the flow of the fluid in the fluid transport channel 210, a portion of the closure part 300 can be made to contact a portion 210c of the lower-side inner surface 222 of the core 202 as illustrated in FIG. 7 and FIG. 11.

In different examples, the closure part 300 can be a diaphragm or can be a ball. While the drawings use a diaphragm in depicting the closure part 300, the closure part is not limited to a diaphragm.

The manipulation part 204 may be a means for controlling the opening/closing operations of the closure part 300 and can, for example, control the closure part 300 to contact or not contact the lower-side inner surface 222 of the core 202.

According to one embodiment, a connection part 302 connected to an upper portion of the closure part 300 can be joined with the manipulation part 204, and the closure part 300 can be made to ascend or descend according to the control of the manipulation part 204. The implementation of such a manipulation part 204 can be modified in various ways, and many structures have been presented in the related art, which structures can be adopted unaltered.

A detailed description is provided below on the structure of a valve that does not induce vortexes.

Referring to FIG. 3 and FIG. 8, the core 202 can be formed on the inside of the main body 200, can include an upper-side inner surface 220 and a lower-side inner surface 222, and can have a hole 400 formed in a portion at the upper part through which a portion of the closure part 300 may move up and down.

The fluid transport channel 210 corresponding to the inner surface of the core 202 may include an inlet 210a and an outlet 210b, where a fluid that has entered through the inlet 210a may be transported towards the outlet 210b.

According to the first disclosed embodiment, a curved part may be formed on at least a portion of the upper-side inner surface 220 and lower-side inner surface 222 of the core 202, formed in such a manner that there are no obstacles (edged portions, etc.) that hinder the flow of the fluid when looking at the segment as a whole.

Preferably, the parts 220a and 220b of the upper-side inner surface 220 near the closure part 300, i.e. adjacent to the hole 400, can have curved shapes as illustrated in FIG. 3, and parts 222a and 222b of the lower-side inner surface 222 corresponding with the curved parts of the upper-side inner surface 220 the part 210c contacting the closure part 300 can have curved shapes.

Here, the curved parts 220a, 220b, 222a, and 222b can be formed sloped in the direction of the closure part 300. If the upper-side inner surface 220 and lower-side inner surface 222 of the core 202 are formed in this manner, there would be no obstacles present in the fluid transport channel 210 to hinder the flow of fluid. Consequently, the occurrence of vortexes can be prevented in the fluid transport channel 210.

Also, parts 200a, 200c, 200b, and 200d of the main body 200 corresponding with the curved parts 220a and 220b of the upper-side inner surface 220 and the curved parts 222a and 222b of the lower-side inner surface 222 can also have curved shapes. Here, the radii of curvature of corresponding curved parts can be the same or similar. Thus, unlike the related art, a plastic valve based on the present invention can have the inner surfaces 220 and 222 of the core 202 and the corresponding parts of the main body formed in curved shapes.

From an energy perspective, the shapes of the inner surfaces 220 and 222 of the core 202 can be designed such that Bernoulli's theorem applies from the inlet 210a to the outlet 210b of the fluid transport channel 210. To be more specific, Bernoulli's theorem states that fluid energy (sum of potential energy and kinetic energy) is the same anywhere within the fluid transport channel 210 as long as there is no loss. Conversely, if a loss occurs, the fluid energy can vary at different positions. Therefore, in a plastic valve based on the present invention, the fluid transport channel 210 can be formed with no fluid loss by designing the inner surfaces 220 and 222 of the core 202 such that Bernoulli's theorem applies, i.e. such that the fluid energy is the same at any position of the fluid transport channel 210.

For example, the fluid transport channel 210 can be designed such that the fluid energy E1 at the inlet 210a, the fluid energy E2 at the part corresponding with the closure part 300, and the fluid energy E3 at the outlet 210b of the fluid transport channel 210 are substantially the same.

In short, a hole 400 can be formed in a portion of the inner surface (e.g. the upper-side inner surface and lower-side inner surface) of the core 202. Accordingly, the shapes of the inner surfaces of the fluid transport channel 210 can be determined such that the energy of the fluid at the inlet of the fluid transport channel 210 and the energy of the fluid entering the part of the fluid transport channel 210 corresponding with the hole 400 are the same, in order that there may be no vortexes created near the hole 400 formed in a portion of the inner surface of the core 202.

Also, the shapes of the inner surfaces of the fluid transport channel 210 can be determined such that the energy of the fluid at the inlet 210a of the fluid transport channel 210 and the energy of the fluid at the outlet 210b of the fluid transport channel 210 are the same, in order that there may be no vortexes created near the hole formed in a portion of the inner surfaces of the core 202.

By thus having the speed of the fluid made equal over the entire part of the fluid transport channel 210 corresponding with the closure part 300, the occurrence of vortexes can be prevented.

Whereas, in the related art, Bernoulli's theorem would not apply to the fluid transport channel due to losses in fluid energy incurred by obstacles such as rectangular edges, etc., the plastic valve based on the present invention has a structure in which the inner surfaces 220 and 222 of the core 202 corresponding with the fluid transport channel 210 do not cause fluid energy losses, so that Bernoulli's theorem can be applied to the fluid transport channel 210.

From the perspective of fluid speed, if the cross section of the fluid transport channel 210 is considered at a particular point of reference, there would be fluid flowing at the upper part and lower part of the corresponding point. Here, if the speeds of the fluids flowing at the upper and lower parts are different, and in particular if the speed of the fluid flowing at the upper part or lower part is different from the speed of the fluid flowing at the center part, then vortexes can occur. Therefore, in order to prevent the occurrence of vortexes, the shape of the fluid transport channel 210 can be determined such that the speeds of the fluids flowing at the upper and lower parts of the fluid transport channel 210 are substantially the same.

Friction applied by the inner surfaces 220 and 222 of the core 202 can cause the speed of the fluid flowing at the upper or lower part to be different from the speed of the fluid flowing at the center part, and in order to minimize such friction, the core 202 may be formed from a fluorine resin. Thus, the differences in speed between the fluids at the upper and lower parts effected by the core 202 can be made negligible, and if as a result, the speeds of the fluids at a particular point, for example the part of the fluid transport channel 210 corresponding with the closure part 300 becomes substantially the same, then the occurrence of vortexes can be avoided.

According to another embodiment, at least a portion of the part 210c of the lower-side inner surface 222 that contacts the closure part 300 can have a curved shape. In particular, the edge portions at both sides of the part 210c of the lower-side inner surface 222 contacting the closure part 300 can have curved shapes. As a result, even when the fluid flows over the part 210c of the lower-side inner surface 222 contacting the closure part 300, the flow of the fluid may not be hindered by the part 210c of the lower-side inner surface 222 contacting the closure part 300. Consequently, the occurrence of vortexes can be avoided in the fluid transport channel 210, especially in the area around the hole 400.

In short, a plastic valve based on the present invention can have the inner surfaces 220 and 222 of the core 202 formed in a way that prevents vortexes in the fluid transport channel 210.

FIG. 9 and FIG. 10 are diagrams conceptually illustrating a plastic valve according to still another embodiment of the present invention.

Referring to FIG. 9 and FIG. 10, portions of the upper-side inner surface 220 and lower-side inner surface 222 of the core 202 can have curved shapes.

To be more specific, the parts 220a and 220b of the upper-side inner surface 220 that are adjacent to the hole 400 can have curved shapes, where the parts 220a and 220b can each be a portion of a virtual circle c1 and c5.

Also, the parts 222a and 222b of the lower-side inner surface 222 corresponding with the parts 220a and 220b can each be a portion of a virtual circle c2 and c6.

Furthermore, the part 210c of the lower-side inner surface 222 that contacts the closure part 300 can also be a portion of a virtual circle c4.

That is, the curved parts 220a, 220b, 222a, 222b, 210c of the inner surfaces 220 and 222 of the core 202 can be portions of virtual circles c1, c2, c4, c5, and c6. As a result, there may be no obstacles hindering the flow of fluid within the fluid transport channel 210, so that the occurrence of vortexes can be avoided in the fluid transport channel 210.

Here, the curved parts 220a, 220b, 222a, 222b, 210c may be parts that are nearby the closure part 300 or are placed in contact with the closure part 300. As can be observed from FIG. 9 and FIG. 10, the fluid transport channel 210 can have a convex shape rather than a linear form, and in such a case, if any one of the convex parts 220a, 220b, 222a, 222b, and 210c has a perpendicular shape instead of a curved shape, there would be a high likelihood of vortexes being created.

The designers of conventional valves formed the convex parts in perpendicular form for easier cast manufacturing, because they were not cognizant of the issue of vortexes occurring. Even though such perpendicular parts, i.e. obstacles, would inevitably cause vortexes in the fluid transport channel, there was no awareness of such vortexes occurring.

Thus, the present invention, derived in recognition of such vortexes, provides an optimized plastic valve that can prevent vortexes and separately implements a cast with which the plastic valve can be manufactured. In particular, the radii of the virtual circles c1, c2, c4, c5, and c6 may be designed to allow the flow of fluid to be as free as possible.

In addition, the arrangement can be configured such that connecting the part 210c of the lower-side inner surface 222 that contacts the closure part 300 with the distal ends of the hole 400 may form a virtual circle c3, and the lower portion of the closure part 300 may be formed in a concave shape. Consequently, the fluid transport channel 210 can be formed with no edged parts overall.

FIG. 7 and FIG. 11 are diagrams conceptually illustrating a plastic valve according to still another embodiment of the present invention.

As illustrated in FIG. 7 and FIG. 11, the part 210c of the lower-side inner surface of the core 202 that contacts the closure part 300 in a plastic valve of the present embodiment can have an elliptical shape e2, and the portion of the closure part 300 that forms a concave shape when contacting the part 210c can also have an elliptical shape e1.

According to one embodiment, the length of the semi-major axis of the ellipse e2 can be shorter than twice the length of the semi-minor axis. If the length of the semi-major axis of the ellipse e2 is greater than or equal to twice the length of the semi-minor axis, the part 210c of the lower-side inner surface configured to contact the closure part 300 can become an obstacle that hinders the flow of the fluid. Therefore, in order that the part 210c contacting the closure part 300 may not act as an obstacle, the semi-major axis of the ellipse e2 can be made to have a length smaller than twice the length of the semi-minor axis, to prevent vortexes.

Also, the length of the semi-major axis of the ellipse e1 can be shorter than twice the length of the semi-minor axis.

FIG. 12 is a cross-sectional view across line A-A of FIG. 2, showing the internal flow path in an open state. Area 810 of FIG. 12 shows the cross section of the fluid transport channel 210. As illustrated in FIG. 12, it can be seen that the inner surface of the fluid transport channel 210 is formed in a curved shape with no obstacle to hinder the fluid flow. Therefore, as there are no obstacles hindering the fluid flow on the inner surface of the fluid transport channel 210 where a fluid that has entered through the inlet 210a exits through the outlet 210b, vortexes may not be created in the fluid transport channel 210.

FIG. 13 and FIG. 14 are diagrams illustrating the shape of the core 202. As illustrated in FIG. 13 and FIG. 14, the core 202 can be formed in a curved shape so that there are no obstacles present that hinder the flow of the fluid.

As illustrated in FIG. 13 and FIG. 14, any shape with which a fluid may be transported through the fluid transport channel 210 without having vortexes occur therein can be applied without limit for the overall shape of the core 202.

FIG. 15 and FIG. 16 are diagrams illustrating the part of the lower-side inner surface that contacts the closure part.

Referring to FIG. 15 and FIG. 16, the part 210c of the lower-side inner surface of the core configured to contact the closure part 300 can have a generally curved shape.

Referring to FIG. 15 and FIG. 16, the part 210c of the lower-side inner surface that contacts the closure part 300 can be formed such that the edge portions 702 and 704 have curved shapes while the middle portion 700 has a flat shape. Since, in this case also, the edge portions 702 and 704 have curved shapes, the fluid can pass over the part 210c of the lower-side inner surface configured to contact the closure part 300 without loss in fluid energy.

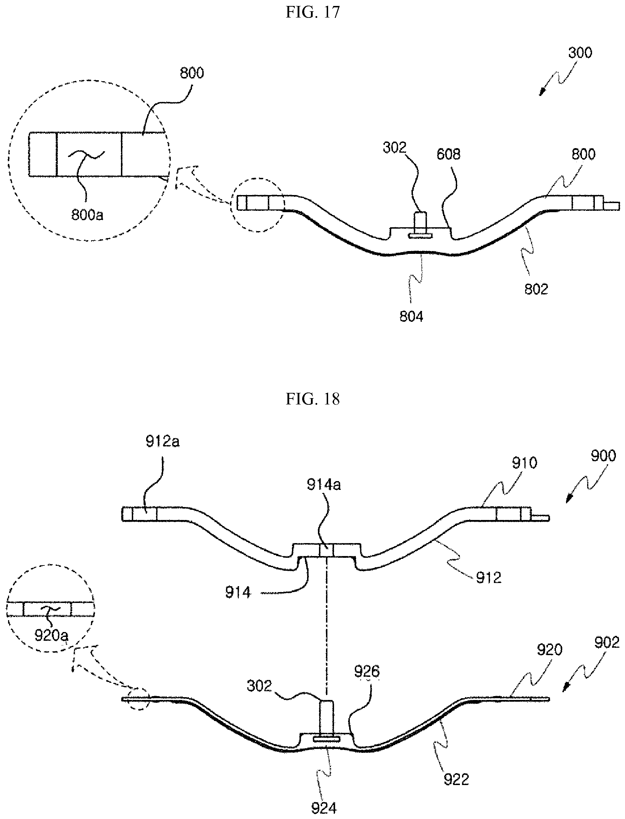

FIG. 17 through FIG. 19 are diagrams illustrating a closure part with diaphragms of various structures applied.

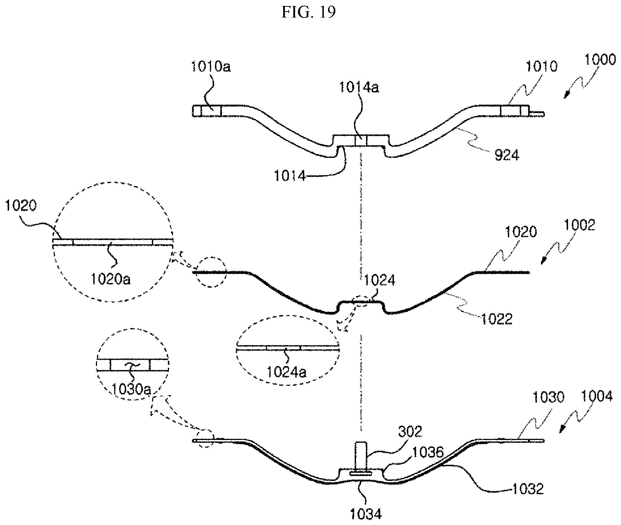

A diaphragm used as the closure part 300 can have a single-membrane structure, as illustrated in FIG. 17, or a double-membrane or triple-membrane structure, as illustrated in FIG. 18 and FIG. 19.

Referring to FIG. 17, the diaphragm of this embodiment can have a single-membrane structure and can be structured to have a connection part 302 formed at the upper end.

To be more specific, a mounting part 806 can protrude from the bottom at an upper surface of the curve part 802, and the connection part 302 can be joined to the mounting part 806. Also, flat parts 800 can be formed that extend in the left and right directions from the mounting part 806, with fastening holes 800a for joining the diaphragm onto the manipulation part 204 formed in the distal end portions of the flat parts 800.

As regards shape, the diaphragm can have an overall shape reminiscent of a seagull, and the mounting part 806 can have any of a variety of shapes in addition to the rectangular cross section illustrated in FIG. 17.

Referring to FIG. 18, a diaphragm of this embodiment can have a double-membrane structure. More specifically, the diaphragm can include an upper membrane 900 and a lower membrane 902 that are joined vertically.

A lower mounting part 926 can be formed at the center of the lower membrane 902, and the connection part 302 can be joined onto the center of the mounting part 926. Of course, lower flat parts 920 may be formed along the lengthwise direction of the lower mounting part 926.

The upper membrane 900 may include an upper mounting part 914 that corresponds with the lower mounting part 926, as well as a hole 914a formed in the center thereof. Here, the connection part 302 joined to the lower mounting part 926 may pass through the hole 914a of the upper mounting part 914 to be exposed to the exterior. Also, the lower surface of the upper membrane 900 may be structured to receive the lower mounting part 926, and upper flat parts 910 may be formed along the lengthwise direction of the upper mounting part 914.

Holes 912a and 920a corresponding to the fastening holes of the single membrane can be formed in the upper membrane 900 and lower membrane 902, respectively.

As regards shape, the upper membrane 900 and lower membrane 902 can have similar shapes overall.

Referring to FIG. 19, the diaphragm of this embodiment can have a triple-membrane structure. To be more specific, the diaphragm can include an upper membrane 1000, a middle membrane 1002, and a lower membrane 1004 that are joined sequentially.

The lower membrane 1004 can include a lower mounting part 1036, and the connection part 302 can be joined vertically at the center of the lower mounting part 1036. Also, lower flat parts 1030 may be formed in the lengthwise direction of the lower mounting part 1036.

The middle membrane 1002 can include a middle mounting part 1024 that joins with the lower mounting part 1036, and the lower surface of the middle mounting part 1024 can be structured to receive the upper surface of the lower mounting part 1036. Here, a hole 1024a may be formed in the center of the middle mounting part 1024, and the connection part 302 may pass through the hole 1024a. Also, middle flat parts 1022 may be formed in the lengthwise direction of the middle mounting part 1024.

The upper membrane 1000 can include an upper mounting part 1014 that joins with the middle mounting part 1024, and the lower surface of the upper mounting part 1014 can be structured to receive the upper surface of the middle mounting part 1024. Here, a hole 1014a may be formed in the center of the upper mounting part 1014, and the connection part 302 that has passed through the middle mounting part 1024 may pass through the hole 1014a to be exposed to the exterior. Also, upper flat parts 1012 may be formed in the lengthwise direction of the upper mounting part 1014.

Holes 1010, 1020, and 1030 corresponding to the fastening holes of the single membrane can be formed in the upper membrane 1000, middle membrane 1002, and lower membrane 1004, respectively.

As regards shape, the upper membrane 1000, middle membrane 1002, and lower membrane 1004 can have similar shapes overall.

While the spirit of the invention has been described in detail with reference to particular embodiments, it is to be appreciated that the person having ordinary skill in the art can change or modify the embodiments without departing from the scope and spirit of the invention.

## Claims

1. A plastic valve comprising:
a main body made from plastic;
a core formed inside the main body; and
a closure part,
wherein a fluid transport channel is formed in an inner space of the core, the fluid transport channel configured to accommodate a fluid moving therethrough,
the closure part contacts one end of the core through a hole of the main body to block a movement of the fluid when the valve is closed, and at least a portion of a core part contacting the closure part or a part adjacent to the hole of the main body at an inner surface of the core corresponding to the fluid transport channel has a curved shape.

2. The plastic valve of claim 1, wherein the closure part is a diaphragm, and an edge portion of a core part contacting the diaphragm has a curved shape,
and wherein a part of the main body corresponding with an inner surface of the core having the curved shape has a curved shape.

3. The plastic valve of claim 1, wherein an inner surface of the core having the curved shape corresponds to a portion of a virtual circle.

4. The plastic valve of claim 1, wherein a semi-major axis of a virtual ellipse formed by a curve of the core part contacting the closure part having the curved shape has a length shorter than twice a length of a semi-minor axis of the ellipse.

5. The plastic valve of claim 1, wherein the main body is made from engineering plastic, and the core is made from fluorine resin,
and wherein the engineering plastic is a polyphenylene ether group resin compound containing a polyphenylene ether group resin and a polystyrene group resin.

6. A plastic valve comprising:
a main body made from plastic;
a core formed inside the main body; and
a closure part,
wherein a fluid transport channel is formed in an inner space of the core, the fluid transport channel configured to accommodate a fluid moving therethrough,
the closure part contacts one end of the core through a hole of the main body to block a movement of the fluid when the valve is closed, and a shape of the fluid transport channel is determined such that, from among a fluid energy at an inlet of the fluid transport channel, a fluid energy at a part of the fluid transport channel corresponding with the closure part, and a fluid energy at an outlet of the fluid transport channel, at least two values of fluid energy are equal.

7. The plastic valve of claim 6, wherein the fluid transport channel has a portion thereof formed in a convex shape not a linear shape, a part adjacent to the closure part at an inner surface corresponding to the fluid transport channel has a curved shape, edges of the core part contacting the closure part have curved shapes, and an upper portion of the core part is flat.

8. A plastic valve comprising:
a main body made from plastic;
a core formed inside the main body; and
a closure part,
wherein a fluid transport channel is formed in an inner space of the core, the fluid transport channel configured to accommodate a fluid moving therethrough,
the closure part contacts one end of the core through a hole of the main body to block a movement of the fluid when the valve is closed, and a semi-major axis of a virtual circle formed by a curve of the core part contacting the closure part having the curved shape has a length shorter than twice a length of a semi-minor axis of the circle.

9. The plastic valve of claim 8, wherein parts adjacent to a hole of the main body at an inner surface of the core have curved shapes, and a part of the main body corresponding with the inner surface of the core having the curved shape also has a curved shape.

10. A plastic valve comprising:
a main body made from plastic;
a core formed inside the main body; and
a closure part,
wherein a fluid transport channel is formed at an inside of the core, the fluid transport channel configured to accommodate a fluid moving therethrough,
the closure part contacts one end of the core through a hole of the main body to block a movement of the fluid when the valve is closed, a fluid entering through an inlet of the fluid transport channel exits through an outlet of the fluid transport channel, and fluids flowing at an upper part and a lower part across a particular cross section of the fluid transport channel have a same speed so that a vortex is not created within the fluid transport channel until the exit of the entered fluid.

11. The plastic valve of claim 10, wherein the fluid transport channel has a portion thereof formed in a convex shape not a linear shape, parts adjacent to a hole of the main body at an inner surface of the core have curved shapes, and a part of the main body corresponding with the inner surface of the core having the curved shape also has a curved shape.

12. A valve comprising:
a main body made from plastic;
a core formed at an inside of the main body; and
a closure part positioned above the main body,
wherein a fluid transport channel is formed in an inner space of the core, the fluid transport channel configured to accommodate a fluid moving therethrough,
the closure part contacts one end of the core through a hole of the main body to block a movement of the fluid when the valve is closed, and a distal end of the core corresponding to an inlet or outlet of the fluid transport channel has a protruding part formed thereon, the protruding part having a structure configured to be received in a holding part formed in a pipe.

13. The valve of claim 12, wherein a protruding part is formed at a distal end of the core corresponding to one of the inlet and the outlet of the fluid transport channel, and a holding part is formed at a distal end of the core corresponding to the other of the inlet and the outlet.

14. A valve comprising:
a main body made from plastic;
a core formed at an inside of the main body; and
a closure part positioned above the main body,
wherein a fluid transport channel is formed at an inside of the core, the fluid transport channel configured to accommodate a fluid moving therethrough,
the closure part contacts one end of the core through a hole of the main body to block a movement of the fluid when the valve is closed, and a distal end of the core corresponding to an inlet or outlet of the fluid transport channel has a holding part formed therein, the holding part having a structure configured to receive a protruding part of a pipe.

15. A core positioned at an inside of a main body in a valve, wherein the core has a fluid transport channel formed at an inner surface thereof, the fluid transport channel configured to accommodate a fluid moving therethrough,
the inner surface of the core includes an upper-side inner surface and a lower-side inner surface, and at least a portion of a part contacting a closure part of the main body or a part adjacent to a hole of the main body at the inner surface of the core corresponding to the fluid transport channel has a curved shape.

16. The core of claim 15, wherein a hole is formed in a portion of the upper-side inner surface of the core, and the closure part of the valve blocks a movement of the fluid of the fluid transport channel at the inner surface of the core through the hole when the valve is closed.

17. The core of claim 15, wherein parts adjacent to the closure part with respect to a center of the closure part in the inner surface of the core all have curved shapes.

18. The core of claim 15, wherein the lower-side inner surface of the core contacting the closure part corresponds to a portion of a virtual circle,
and a semi-major axis of the virtual circle formed by a curve of the core part contacting the closure part having the curved shape has a length shorter than twice a length of a semi-minor axis of the circle.

19. The core of claim 15, wherein a curved portion of the upper-side inner surface and a curved portion of the lower-side inner surface corresponding with the curved portion have a same radius of curvature, and the closure part contacts a portion of the lower-side inner surface.

20. A core positioned at an inside of a main body in a valve, wherein the core has a fluid transport channel formed at an inner surface thereof,
the inner surface of the core includes an upper-side inner surface and a lower-side inner surface, a hole is formed in a portion of the upper-side inner surface and the lower-side inner surface,
and shapes of the inner surfaces of the fluid transport channel are determined such that, from among a fluid energy at an inlet of the fluid transport channel, a fluid energy at a part of the fluid transport channel corresponding with a closure part of the valve, and a fluid energy at an outlet of the fluid transport channel, at least two values of fluid energy are equal, so that a vortex is not created at a vicinity of the hole.

21. A core positioned at an inside of a main body in a valve, wherein the core has a fluid transport channel formed at an inner surface thereof,
the inner surface of the core includes an upper-side inner surface and a lower-side inner surface,
and shapes of the inner surfaces of the fluid transport channel are determined such that a fluid energy at an inlet of the fluid transport channel and a fluid energy at an outlet of the fluid transport channel are equal, so that a vortex is not created at a vicinity of the hole.

22. A core positioned at an inside of a main body in a valve, wherein the core has a fluid transport channel formed at an inner surface thereof,
a closure part of the valve contacts a part of the core through a hole of the main body to block a movement of a fluid in the fluid transport channel when the valve is closed, a core part contacting the closure part corresponds to a portion of a virtual circle,
and a semi-major axis of the circle has a length shorter than or equal to twice a length of a semi-minor axis of the circle.

23. A core positioned at an inside of a main body in a valve, wherein the core has a fluid transport channel formed at an inner surface thereof,
a closure part of the valve contacts a part of the core through a hole of the main body to block a movement of a fluid in the fluid transport channel when the valve is closed, and a speed of the fluid is constant over an entirety of a part in the fluid transport channel corresponding with the closure part so that a vortex is not created.

24. A core positioned at an inside of a main body in a valve, wherein the core has a fluid transport channel formed at an inner surface thereof,
a closure part of the valve contacts a part of the core through a hole of the main body to block a movement of a fluid in the fluid transport channel when the valve is closed, a fluid entering through an inlet of the fluid transport channel exits through an outlet of the fluid transport channel, and fluids flowing along at an upper part and a lower part across a particular cross section of the fluid transport channel have a same speed so that a vortex is not created within the fluid transport channel until an exit of an entered fluid.
